# EUROPEAN PATENT SPECIFICATION

(11) **EP 2 240 539 B1**
(45) Date of publication and mention of the grant of the patent: **22.01.2014**
(21) Application number: 08872107.1
(22) Date of filing: 15.12.2008
(51) Int. Cl.: C08J 9/00, C08J 9/12, C08L 25/04, C08L 25/12, C08L 23/00

(54) **ARTICLE AND METHOD OF PRODUCING A LOW DENSITY FOAM BLEND OF STYRENIC POLYMER AND POLYOLEFIN**
ARTIKEL UND VERFAHREN ZUR HERSTELLUNG EINER SCHAUMSTOFFMISCHUNG VON GERINGER DICHTE AUS EINEM STYROLPOLYMER UND EINEM POLYOLEFIN
ARTICLE ET PROCÉDÉ DE PRODUCTION D'UNE MOUSSE BASSE DENSITÉ À BASE D'UN MÉLANGE POLYMÈRE STYRÉNIQUE ET POLYOLÉFINE

(30) Priority: 06.02.2008 US 26486 P
(43) Date of publication of application: 20.10.2010
(73) Proprietor: Dow Global Technologies LLC, Midland, MI 48674 (US)
(72) Inventor: VO, Chau, Van, F-67460 Souffelweyersheim (FR)
(74) Representative: Raynor, John
(86) International application number: PCT/US2008/086797
(87) International publication number: WO 2009/099482

(56) References cited:
- EP-A- 1 847 566
- WO-A-00/78851
- WO-A-96/11970
- US-A- 4 515 907
- US-A- 5 422 378
- US-A- 5 426 125
- WONG C-M ET AL: "EFFECT OF LOW DENSITY POLYETHYLENE ON POLYSTYRENE FOAM" JOURNAL OF CELLULAR PLASTICS, SAGE PUBLICATIONS, LONDON, GB, vol. 42, no. 2, 1 March 2006 (2006-03-01), pages 153-163, XP001244963 ISSN: 0021-955X

## Description

### FIELD OF THE INVENTION

The present invention relates generally to thermoplastic polymeric foams, and particularly to low density extruded foam blends and processing thereof.

### BACKGROUND OF THE INVENTION

In the field of polymer processing, extruded polystyrene foams are generally produced with relatively high density, usually above 36 kilograms per cubic meter (kg/m³). To reduce the foam density, a secondary post expansion such as steam or vacuum post expansion may be used to increase blowing agent efficiency. However, it is observed that with the use of secondary post expansion, the foam tends to expand in a direction generally parallel with the extrusion direction (commonly known as the "machine direction" and along the X-axis in a Cartesian system) and does not tend to expand in a direction generally perpendicular to the extrusion direction (commonly known as the "cross-machine direction" and along the Y-axis in a Cartesian system). As a consequence of machine direction expansion, a drop in the vertical compressive strength (as measured per American Society for Testing Materials ("ASTM") ASTM D1621-04) may occur, wherein vertical compressive strength would be the compressive strength in response to a load along the Z-axis in a Cartesian system (commonly referred to as the thickness dimension, which is mutually perpendicular to the X and Y axes). The vertical compressive strength influences a measure known as the "compressive strength ratio (Rc)". The compressive strength ratio "Rc" is the ratio of vertical compressive strength to total compressive strength of the foamed article. Total compressive strength is a sum of compressive strength in the X, Y and Z axes of the foam.

In many applications for extruded foams, such as energy absorbing articles or safety barriers, it is often desired that the foam have a relatively low density (*e.g.*, less than about 36 kg/m³ as measured by ASTM D1622-03), relatively high Rc (*e.g.*, greater than about 0.35) or both. Foams with a vertical compressive strength of preferably greater than about 100 kilo-Pascal (kPa) and less than about 300 kPa per ASTM D1621-04) may also be desired. Good surface finish (*e.g.*, substantially free of cracking) and good cell structure (*e.g.*, foam cells containing pin holes less than about 5 percent (%) of the time in the case of a closed cell foam) may also be desirable. It is also attractive to produce such foam with relatively benign environmental consequences.

Generally, prior to the present invention, the art sought to achieve the above mentioned foam characteristics through the use of blends of polystyrene and polyolefin resin and expensive compatibilizing ingredients. For example, one approach has been to employ polymeric compatibilizers (*e.g.*, hydrogenated styrene-conjugated diene rubber, ethylene-styrene interpolymer, styrene-isoprene-styrene triblock copolymer, or the like), permeability modifiers (*e.g.*, glycerol monostearate, monostearic acid glyceride, monostearin, or the like), or a cross linking agent. By way of illustration, U.S. Patent No. 6,048,909 discloses a foam with attractive characteristics in which an interpolymer is employed in a blend.

From the processing side, the use of limonene as foaming aids, emulsion polymerisation or the use of an environmentally unfriendly blowing agents (e.g., mixture of chlorine and dichlorodifluoromethane "CFC-12") have been used. By way of illustration, U.S. Patent No. 4,515,907 and Japanese Patent 61101538A disclose a foam manufactured with one or both of the above referenced environmentally unfriendly blowing agents.

Among the literature that may pertain to this technology include the following patent documents: United States Published Patent Application ("USPub"); United States Patent ("US"); International Application Published Under The Patent Cooperation Treaty ("WO"); Japan Patent ("JP"); German Patent ("DE"); European Patent ("EP"); USPub2002111389A1; US5,290,822; US4,652,590; USPub2004152795A1; US4,515,907; USPub2005154115A1; US4,692,471; US4,605,682; US5,693,687; US6,225,363; US5,137,933; US6,048,909; US5,591,778; WO2004087798A1; WO2000053669A1 WO9951667A1; WO8808864A1; WO9114724A2; JP06049256A; JP04089846A; JP2004352927A; JP62174237A; JP03081347A; JP02232240A; JP61101538A; JP59105036A; JP58191727; JP62280237A; JP2004323635A; DE102004042297A1; DE102004042297A1; EP1095969A2; and EP1847566A1.

EP 1 847 566 describes a blend comprising at least 70% by weight of a polystyrene resin and from 0.5% to 30% by weight of a different thermoplastic, to blend for the elaboration of a foam, a method for producing it and its use as a thermal insulator.

WO 00/78851 describes a closed-cell polymeric foam which is formed using oil-containing furnace black as an insulation enhancer.

Wong et al, Journal of Cellular Plastics, 2006, p153-163 examines the foam density of polystyrene (PS) blended with low density polyethylene (LDPE) at various ratios, and the thermal conductivity of vacuum insulation panes using PS/PE with filler foam as core materials.

WO 96/11970 discloses a process for preparing a low density closed-cell polymer foam comprising a plurality of closed-cells having an average cell size of at least about 0.08mm characterized in that the process comprises the steps of heat plastifying an expandable or foamable monovinyl aromatic polymer formulation comprising a nonlinear monovinyl aromatic polymer composition and an environmentally acceptable blowing agent; and reducing the pressure on the mixture to form a foam.

US 5,426,125 describes a foamable styrenic polymer gel capable of forming a closed cell structure and a process for making the foam structure.

### SUMMARY OF THE INVENTION

The present invention meets the above needs by providing an extruded styrenic foam and method of producing it that affords attractive density, compressive ratios, surface quality, cell structure characteristics or any combination thereof with a minimal amount of or without substantially any compatibilizing substance. Additives that function as compatibilizing substances or permeability modifiers generally are preferably present in an amount less than about 5% of the total polymer weight, more preferably less than about 2%, more preferably less than about 1%, and most preferably absent entirely from the foamed article.

Accordingly, pursuant to one aspect of the present invention, there is contemplated an extruded polymeric foam comprising:
(i) a styrenic polymer having a glass transition temperature (T_{g}: the temperature below which the physical properties of amorphous materials vary in a manner similar to those of a solid phase (glassy state), and above which amorphous materials behave like liquids);
   wherein T_{g} is obtained using the half-height method from the second DSC melting curve according to ASTM E1356-03;
   wherein the styrenic polymer consists essentially of a styrene-acrylonitrile copolymer;
   and wherein the styrene-acrylonitrile copolymer has an acrylonitrile component of 5% to 25% based on total weight of styrene-acrylonitrile copolymer; and
(ii) an olefinic polymer having a crystallization temperature (T_{c}),
   wherein T_{c} is the peak melting temperature obtained from the cooling curve using a differential scanning calorimeter (DSC) according to ASTM D3418-03; and
   wherein the olefinic polymer consists essentially of polypropylene, ethylenic copolymer, or any combination thereof;
wherein the Tg of the styrenic polymer and the T_{c} of the polyolefin, are within 30°C of each other;
wherein the amount of polyolefinic material to styrenic material is from 2:98 to 20:80;
wherein the styrenic polymer and the olefinic polymer are present as a blend including less than about 5% interpolymer or less than about 2% of any other compatibilizers by total polymer weight; and
wherein the foam has a resultant density below about 36 kg/m³ (as measured by ASTM D1622-03), a vertical compressive strength greater than about 100 kPa and less than about 300 kPa (as measured by ASTM D1621-04), and a compressive strength ratio greater than about 0.35.

The invention may be further characterized by one or any combination of the features described herein, such as the foam is essentially free of any compatibilizers; the glass transition temperature T_{g} of the styrenic polymer and the crystallization temperature T_{c} of the polyolefin, measured in °C, are preferably within 20°C of each other; the extruded low density polymeric foam includes at least one additive selected from a fire retardant, a colorant, a nucleator, a clay, an ultraviolet stabilizer, or an IR blocker; the extruded polymeric foam wherein the T_{g} is in the range of about 90 to 120°C, the T_{c} is in the range of about 70 to 130°C; the extruded polymeric foam consists essentially of at least 50% styrene-acrylonitrile copolymer and at least 5% linear low density polyethylene by weight; the extruded low density polymeric foam has a compressive strength ratio of greater than about 0.35 (as measured per ASTM D1621-04); the extruded low density polymeric foam has a resultant density is below about 32 kg/m³ (as measured by ASTM D1622-03); the extruded low density polymeric foam is an open cell foam, a closed cell foam, or any combination thereof (as used herein, "closed cell" foam structures refer to foams having an open cell content of less than 30%, as determined by ASTM D6226-05, while "open cell" foam structures refer to an open cell content greater than or equal to 30%, as determined by ASTM D6226-05); the extruded polymeric foam wherein the foam vertical compressive strength less than about 300 kPa; or any combination of the foregoing.

Another aspect of the present invention contemplates a process of forming the extruded polymeric foam article, comprising the steps of:
(a) blending the styrenic material with the olefinic polymer wherein the olefinic polymer has a T_{c} greater than 70°C to form a polymeric blend;
(b) introducing a blowing agent including water (H₂O), carbon dioxide (CO₂), or both to the polymeric blend; and
(c) foaming the polymeric blend at a temperature above the T_{c} of the olefinic polymer to directly form a foam.

Also disclosed herein is a process of forming an extruded polymeric foam article, comprising the steps of: blending a styrenic polymer with an olefinic polymer having a crystallization temperature greater than 25°C in an amount less than the amount of the styrenic polymer to form a polymeric blend including less than about 5% interpolymer or less than about 2% of any other compatibilizer by total polymer weight; introducing a blowing agent including H₂O, CO₂, hydrocarbons, hydrofluorocarbons, or any combination of the preceding to the polymeric blend; and foaming the polymeric blend at a temperature above the crystallization temperature of the olefinic polymer to a resulting density below about 28 kg/m³(as measured by ASTM D-1622-03) and a compressive strength ratio greater than about 0.35.

This aspect of the invention may be further characterized by one or any combination of the features described herein, such as the styrenic polymer consists essentially of polystyrene, styrene-acrylonitrile copolymer, or any combination thereof; the polyolefin consists essentially of polyethylene, polypropylene, ethylenic copolymer, olefin block copolymer or any combination thereof; the styrene-acrylonitrile copolymer has an acrylonitrile component of about 1% to 35%; the process includes a step of introducing at least one additive to the polymeric blend selected from a fire retardant, a colorant, a nucleator, a clay, an ultraviolet stabilizer, an Infrared (IR) blocker, or any combination thereof; the polymeric blend consists essentially of at least 50% by weight of the polymeric blend styrene-acrylonitrile copolymer and at least 2% linear low density polyethylene by weight of the polymeric blend; the foam is an open cell foam or the foam is a closed cell foam, or any combination of the foregoing.

Among the advantages obtainable from the aspects of the present invention are that relatively low density foam (*e.g.*, less than (<) 36 kg/m³) with high compressive strength ratio (Rc greater than (>) 0.35, preferably > 0.40) can be efficiently and reproducibly extruded online using an environmentally acceptable foaming agent and little or no compatibilizers. The foam generally will have a regular cell structure (that is, the cell structure is relatively equalized and is generally consistent and uniform throughout the foam). The resulting properties and characteristics should allow the foam to function well for applications requiring energy absorption. In particular, the foam may help meet the market requirements for Thorax impacts (*e.g.*, impacts that effect vehicle passengers in a side impact) and Safety barrier impacts (*e.g.*, vehicle impacts to roadway barriers) applications. For these energy absorbing applications, the vertical compressive strength of the foam should be less than 300 kPa, preferably less than 250 kPa and most preferably less than 200 kPa.

### DETAILED DESCRIPTION

The present invention is directed at an improved polymeric foam article, and preferably one made from a thermoplastic foam (*e.g.*, a polymeric foam material including an alkenyl aromatic polymer, an olefinic polymer, such as α-olefinic polymer, and more preferably a combination thereof). The present invention is particularly suited for polymeric foams made by an extrusion foaming process. By way of example, in a preferred aspect of the present invention, polymeric ingredients are converted into a polymer melt and a blowing agent is incorporated into the polymer melt to form a foamable gel. The foamable gel is then extruded through a die and appropriately cooled to form a desired product. Depending upon the die and operating conditions, the product may vary from a coalesced foam strand product, such as an extruded foam plank or rod, through foam beads and eventually to chopped strands of foamable beads. Preferably, the product is a relatively thick plank or rod (*e.g.*, greater than about 15 millimeters (mm)). More detailed processing parameters and steps are discussed below.

References to an acrylic or (meth)acrylic (or derivative terms such as "acrylate") contemplate meth-acrylics and acrylics (and corresponding derivative terms).

The term "consisting essentially of' to describe a combination shall include the elements, ingredients, components or steps identified, and such other elements ingredients, components or steps that do not materially affect the basic and novel characteristics of the combination.

The use of the terms "comprising" or "including" to describe combinations of elements, ingredients, components or steps herein also contemplates embodiments that consist essentially of the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps. All references herein to elements or metals belonging to a certain Group refer to the Periodic Table of the Elements published and copyrighted by CRC Press, Inc., 1989. Any reference to the Group or Groups shall be to the Group or Groups as reflected in this Periodic Table of the Elements using the IUPAC system for numbering groups.

One particular preferred application of the aspects of the present invention is a closed cell low density extruded polymeric foam (*e.g.*, including a polystyrenic material) with a density below about 36 kg/m³ (as measured by ASTM D1622-03). It also exhibits a vertical compressive strength greater than about 100 kPa and less than about 300 kPa (as measured by ASTM D1622-03), good surface finish (*e.g.*, visually substantially free of cracking) and good closed cell structure (*e.g.*, closed foam cells as defined and measured by ASTM D6226-05 in an amount less than about 5% of total cells throughout substantially all of its volume). In another aspect, the foam article could exhibit the above characteristics, but will include an open cell foam. Closed cell foams of the present invention may have up to 30% open cell content, but preferably have 10% or less, more preferably 5% or less and most preferably 0% open cell content as determined by ASTM D6226-05. A particularly useful application of the teachings of the present invention herein is in the manufacture of an extruded foam, which may include or consist essentially of a polystyrene-including material such as a blend or copolymer thereof (*e.g.*, a styrene-acrylonitrile copolymer) and an olefinic polymer. In a particularly preferred embodiment, the T_{g} of the styrenic polymer and the T_{c} of the olefinic polymer, are preferably within about 30°C and more preferably within about 20°C of each other.

The T_{c} is measured using a differential scanning calorimeter (DSC) according to ASTM D3418-03. It is obtained from the cooling curve and is the peak melting temperature. The glass transition temperature is obtained using the half-height method from the second DSC melting curve (also called second heat) according to ASTM E1356-03. The procedure consists of heating rapidly a 5 gram sample in a sealed aluminum pan from ambient temperature to 180°C (at a rate of 10°C per minute); kept at 180°C for 4 minutes to ensure complete melting; cooled at 10°C/min to about 40°C below the expected T_{g}; kept at this temperature for 4 minutes for DSC stabilization; and heated again to 180°C at 10°C/min.

One illustrative article of the present invention includes at least about 50% polystyrene, at least about 1% styrene-acrylonitrile copolymer, and at least 5% olefinic polymer, all by weight of the total polymer. Additives that function as compatibilizers or permeability modifiers (*e.g.*, hydrogenated styrene-conjugated diene rubber, hydrogenated and acid-modified vinylarene-diene block copolymers, ethylene-styrene interpolymer, styrene-isoprene-styrene triblock copolymer, glycerol monostearate, and monostearic acid glyceride, monostearin) generally are preferably present in an amount less than about 5% of the total polymer weight, more preferably less than about 2%, more preferably less than about 1%, even more preferably less than about 1% and most preferably absent entirely from the foamed article. By way of example, it is contemplated that such compatibilizers or permeability modifiers as listed above may be present, but preferably only in limited quantities (as a weight percentage of the total polymer) such as: less than 5% hydrogenated styrene-conjugated diene rubber; less than 5% hydrogenated and acid-modified vinylarene-diene block copolymers; less than 5% ethylene-styrene interpolymer; less than 3% styrene isoprene styrene triblock copolymer; less than 2% glycerol monostearate; less than 1% monostearic acid glyceride, less than 0.5% monostearin. For terms of the present application, a compatibilizer may be defined as a substance that prevents macroscopic phase separation of the polymer blend, and the polymer blend is melt processable to form a foam. For terms of the present application, a permeability modifier is a substance that can be used to modify the rate at which the blowing agent escapes from the cells of the foam after the foam is cooled. Other fillers or additives (*e.g.*, a fire retardant, a colorant, a nucleator, a clay, an ultraviolet stabilizer, an infrared (IR) blocker, or the like) may be added to enhance article properties (*e.g.*, article color, thermal transfer properties, flammability or the like).

As indicated, the present invention makes advantageous use of alkenyl aromatic compounds such as styrene. Accordingly, it should be appreciated that reference to a "styrenic" or "polystyrene" material, in the context of the extruded polystyrene foam article herein, includes polymeric materials containing greater than about 50, preferably about 75 or more, more preferably about 85 or more weight percent of a polymer derived from one or more alkenyl aromatic compounds such as styrene. The polymeric material may be entirely one or more alkenyl aromatic compound. Suitable amounts of copolymerizable compounds, such as C₁₋₄ methacrylates and acrylates, acrylic acid, methacrylic acid, maleic acid, acrylonitrile, maleic anhydride, and vinyl acetate may be incorporated into the polystyrene material. One preferred embodiment employs a copolymer of styrene with a vinyl, and more preferably with an ethylenically unsaturated nitrile, such as acrylonitrile, methacrylonitrile or combination thereof. For example, it is preferred to employ such ethylenically unsaturated nitrile as part of a co-polymer, and particularly a melt processable copolymer such as styrene-acrylonitrile ("SAN").

Examples of alternative styrenic polymers suitable for use herein may be found in paragraphs 28-38 of published U.S. Application No. USPub20020111389.

It should be appreciated that reference to a styrene-acrylonitrile (SAN) copolymer (or, for simplicity, "SAN"), in the context of the extruded polystyrene foam article herein, can include a SAN copolymer that contains a graft copolymer content, a block copolymer content, a random copolymer content, or any combination thereof. The preferred SAN employed herein preferably include graft copolymer content. The SAN copolymer can also be linear or branched.

Typically, the weight-averaged molecular weight (Mw) of the SAN and, desirably, any additional polymer in the polymer foam is about 40,000 or more, preferably about 60,000 or more, more preferably, about 75,000 or more. The Mw of the SAN and, desirably, any additional polymer in the polymer foam is generally about 300,000 or less, preferably about 250,000 or less, and more preferably about 150,000 or less. By way of example the Mw ranges from about 100,000 to about 145,000, and more preferably about 120,000 to about 135,000.

Additionally, it is desirable for about 90% or more, and preferably all of the polymeric ingredients in the foam to have a Mw of less than about 1,000,000. The weight average molecular weight of the SAN or any other polymeric ingredient is preferably selected to balance competing considerations. For example, the weight average molecular weight is desirably high enough that resulting foams will exhibit sufficient physical characteristics for the intended application. However, it is not so high that it will unduly increase gel viscosity during processing, so that reliable and consistent foaming will be compromised.

The proportion of weight average molecular weight (Mw) to number average molecular weight (Mn) for the SAN copolymer, expressed as Mw/Mn is preferably in the range of about 1.5 to about 5.0, and more preferably it is about 2.3.

The styrenic polymers preferably have a glass transition temperature of at least about 80°C, and more preferably at least about 100°C. The styrenic polymers preferably have a glass transition temperature of less than about 130°C, and more preferably less than about 120°C.

For the embodiments in which SAN is employed as the styrenic material or in combination with another styrenic material, preferably, the concentration of polymerized acylonitrile (AN) in the SAN copolymer is sufficient that it allows foaming with commercially attractive blowing agents while maintaining attractive thermal stability characteristics while in the melt phase in an extruder. For example, it is preferable that the AN be present in an amount of at least about five (5) wt% or more by weight of the total styrenic material composition, more desirably about ten (10) wt% or more and desirably about 20 wt% or less based on total styrenic material composition weight. The total styrenic material represents at least 50 wt% of the total polymeric material of the foamed article and preferably greater than 50 wt% and can be 75 wt% or more, 90 wt% or more, 95 wt% or more and even 98 wt% based on total polymer weight in the foam.

As indicated, among the polymeric constituents of the foams of the present inventions, there is preferably included at least one polyolefinic material, and preferably an α-olefin. The amount of polyolefinic material to styrenic material is from about 2:98 to about 20:80 or greater, preferably about 5:95 and more preferably about 10:90, although always in an amount less that that of the styrenic material. The α-olefin polymer is a polymeric material that contains repeated units derived by polymerizing an α-olefin. The α-olefin polymer may optionally be free of any polymerized vinyl aromatic monomers, sterically hindered aliphatic or cycloaliphatic vinyl or vinylidene monomers, or both. Particularly suitable α-olefins have from 2 to about 20 carbon atoms, preferably from 2 to about 8 carbon atoms, and include ethylene, propylene, 1-butene, 4-methyl-1-pentene, 1-hexene, 1-octene and the like. A particularly preferred polyolefinic material includes and more preferably consists essentially of ethane-1-octene copolymer. Preferred α-olefin polymers are homopolymers or copolymers of ethylene or propylene. It is preferred that the olefinic polymer includes polyethylene, polypropylene, ethylenic copolymer, or any combination thereof. The preferred olefinic polymer includes a polyethylene, such as low density polyethylene (LDPE), linear low density polyethylene (LLDPE), high density polyethylene (HDPE), Ultra high molecular weight polyethylene (UHMWPE), or any combination thereof. A particularly preferred olefinic polymer includes LLDPE, which may include an ethylene homopolymer, and/or an ethylene copolymerized with a longer chain olefin, such as butene, hexene, octene, or any combination thereof. The polyolefinic material may be the reaction product of a low pressure process employing conventional Ziegler-Natta type catalysts, as described in U.S. Pat. No. 4,076,698. It may have a generally homogeneous distribution of comonomer, as are described, for example, in U.S. Pat. No. 3,645,992 and U. S. Pat. Nos. 5,026,798 and 5,055,438. The polyolefinic material may be a reaction product of polymerization using a metallocene catalyst.

Particularly suitable -olefinic polymers have a melt index (ASTM D1238-05, 190°C /2.16 kg) of from about 0.01 to about 1000 grams per 10 minutes (g/10 min), and a density of from about 0.85 to about 0.97 grams per cubic centimeter (g/cc), and more preferably from about 0.85 to about 0.95 g/cc. The olefinic polymers preferably have a crystallization temperature of at least about 50°C, and more preferably at least about 70°C. The olefinic polymers preferably have a crystallization temperature of less than about 130°C, and more preferably less than about 120°C. The olefinic polymers preferably have a Tensile Yield ranging from about 8 to 13 mega-Pascal (MPa) and a Ultimate Elongation Percentage ranging from about 200% to 900%, all as measured by ASTM 882.

An example of one preferred olefinic polymer has a density of about 0.92 kg/m³ (ASTM D792-00), a melt mass flow rate of about 2.3 (190°C/2.16 kg, ASTM D1238-05) and a T_{c} of about 105°C.

An example of one preferred olefinic polymer is LLDPE Dowlex^{™} 2247, available from The Dow Chemical Company.

Other suitable olefinic polymers may be selected from those disclosed in paragraphs 38-45 of published U.S. Application No. USPub20020111389. Thus suitable α-olefin polymers may include homopolymers or copoloymers of propylene. In addition, olefinic polymers that have been subjected to coupling or light crosslinking treatments are useful herein, provided that they remain melt processable.

The foams herein are made with the use of a suitable blowing agent, e.g., a physical blowing agent, a chemical blowing agent, or both. Physical blowing agents include gasses and liquids that volatilize under the conditions of the foaming process, whereas chemical blowing agents produce a gas under the condition of the foaming process through some chemical means, usually decomposition. Particularly suitable physical blowing agents include halocarbons containing 1 or 5 carbon atoms such as methyl chloride, ethyl chloride, hydrofluorocarbons such as difluoromethane (HFC-32), perfluoromethane, ethyl fluoride (HFC-161), 1,1-difluoroethane (HFC-152a), 1,1,1-trifluoroethane (HFC-143a), 1,1,2,2-tetrafluoroethane (HFC-134), 1,1,1,2-tetrafluoroethane (HFC-134a), pentafluoroethane (HFC-125), perfluoroethane, 2,2-difluoropropane (HFC-272fb), 1,1,1-trifluoropropane (HFC-263fb), 1,1,1,2,3,3,3-heptafluoropropane (HFC-227ea), 1,1,1,3,3-pentafluoropropane (HFC-245fa), and 1,1,1,3,3-pentafluorobutane (HFC-365mfc); organic blowing agents such as saturated or unsaturated and cyclic hydrocarbons having from two to nine carbons (C2-C9) including ethane, propane, n-butane, isobutane, n-pentane, isopentane, neopentane, cyclobutane, and cyclopentane; and aliphatic alcohols having from one to five carbons (C1-C5) such as methanol, ethanol, n-propanol, and isopropanol; carbonyl containing compounds such as acetone, 2-butanone, and acetaldehyde; ether containing compounds such as dimethyl ether, diethyl ether, methyl ethyl ether; carboxylate compounds such as methyl formate, methyl acetate, ethyl acetate; carboxylic acid compounds. Carbon dioxide, nitrogen, argon, water and the like are also useful. Mixtures of these physical expanding agents can be used. Suitable chemical blowing agents include, for example, azodicarbonamide, dinitrosopentamethylene tetramine, benzenesulfonyl hydrazide, azodiisobutyronitrile, 4,4-oxybenzene sulfonyl semi-carbazide, p-toluene sulfonyl semi-carbazide, barium azodicarboxylate, N, N'-dimethyl-N, N'-dinitrosoterephthalamide, trihydrazino triazine and sodium bicarbonate. A particularly preferred blowing agent for use herein is selected from water, carbon dioxide, isobutane (iC4) or any combination thereof

By way of example, in one preferred embodiment, the blowing agent may be incorporated into the melt in a weight proportion of between about 0.5 to about 50 parts of blowing agent per hundred parts of the total polymer weight (*e.g.*, LLDPE and SAN copolymer) to be expanded, more preferably about 1 to about 30 parts per hundred (pph) parts of the polymer to be expanded; and still more preferably from about 3 to 15 parts per hundred parts of the polymer to be expanded.

In one preferred embodiment, the foam contains less than about 5%, preferably less than about 2%, or most preferably is free of any random interpolymer. Such a compatibilizer is discussed in published U.S. Application No. USPub20020111389. Additionally, is preferably free of any α-olefin/vinyl aromatic interpolymer. This includes copolymers, terpolymers and tetrapolymers. "Monomeric unit" refers to a polymer backbone portion that is derived from a single monomer. "Hydrocarbyl" means any aliphatic, cycloaliphatic, aromatic, aryl substituted aliphatic, aryl-substituted cycloaliphatic, aliphatic substituted aromatic, or aliphatic substituted cycloaliphatic groups. "Hydrocarbyloxy" means a hydrocarbyl group having an oxygen linkage between it and the carbon atom to which it is attached. "Aliphatic" means a compound having a straight- or branched-chain arrangement of its carbon atoms.

An interpolymer is defined as a polymer blend that contains a polymeric compatibilizer for the alkenyl aromatic polymer and the α-olefin polymer. The polymeric compatibilizer prevents macroscopic phase separation of the polymer blend, and the polymer blend is melt processable to form a foam. The compatibilizer enhances the mixing between the polymeric components. Suitable compatibilizers include certain aliphatic α-olefin/vinyl aromatic interpolymers.

Examples of α-olefins include for example, α-olefins containing from 3 to about 20, preferably from 3 to about 12, more preferably from 3 to about 8 carbon atoms. Particularly suitable are ethylene, propylene, butene-1,4-methyl-1-pentene, hexene-1 or octene-1 or ethylene in combination with one or more of propylene, butene-1,4-methyl-1-pentene, hexene-1 or octene-1. These α-olefins do not contain an aromatic, hindered aliphatic or cycloaliphatic moieties. Other optional polymerizable ethylenically unsaturated monomer(s) include norbornene and C 1-10 alkyl or C 6-10 aryl substituted norbornenes, with an exemplary interpolymer being ethylene/styrene/norbornene.

Additionally, in a preferred embodiment, the foam may be a binary blend, free of cross linking styrene and olefin. It may also be free of an interpenetrating network derived by solution or emulsion polymerization of styrene and olefin, and free of grafted ethylene propylene diene monomer (EPDM).

In another preferred embodiment, it is desirable for the foam article to have a substantial thickness such that it is useful in applications such as Thorax impacts (*e.g.*, impacts that effect vehicle passengers in a side impact) and Safety barrier impacts (*e.g.*, vehicle impacts to roadway barriers) applications. The foam article is preferably at least about 10 mm thick, more preferably about 15 mm thick and most preferably about 20 mm thick or more.

Though the compositions herein may have application for making expanded bead foams, preferably, the present foam structures are formed by an extrusion process, such as that described in paragraphs 74-81 of published U.S. Application No. USPub20020111389.

The process thus will typically include melting and mixing the polymer or polymers as previously described or with other polymers, additive ingredients (such as one or more of slip agents, dyes, pigments, fillers (optionally, the material may be free of any filler, e.g., it is free of any talc), antioxidants, extrusion aids, nucleating agents, stabilizing agents, antistatic agents, fire retardants, acid scavengers, and infrared attenuators including carbon black and graphite), or any combination thereof, to form a plastic melt.

A blowing agent is incorporated into the plastic melt for forming a foamable gel, and the foamable gel is extruded through a die for forming a resulting foamed structure. During melting and mixing, the polymers are heated to a temperature at or above the softening temperature of the styrenic polymer and at or above the T_{c} of the olefinic polymer. The polymer blend can be prepared by simple melt blending. If desired, the individual polymers can be separately charged into an extruder together with blowing agent and other additives to form the polymer blend as part of the foam-making process. Alternatively, the polymer blend can be made separately prior to the foaming process. The dispersion of the polymer components preferably is substantially uniform (*e.g.*, components dispersed in proportional amounts throughout the polymer blend).

Melting and mixing of ingredients can be accomplished by any means known in the art such as with an extruder, mixer, or blender. Mixing can be accomplished as a separate step, or it can be integrated into the extrusion step by selecting an extruder embodiment suitable for mixing (*e.g.*, a single screw extruder using a mixing screw or a twin screw extruder). The blowing agent is typically blended with the plastic melt at an elevated pressure sufficient to prevent substantial expansion of the resulting gel or loss of generally homogeneous dispersion of the blowing agent within the gel (*e.g.*, typically pressures ranging from about 100 to about 300 bar, where 1 bar is essentially equivalent to 1 atmospheric pressure at sea level).

The resulting foamable gel is preferably passed through a cooling apparatus (*e.g.*, a single screw extruder, a heat exchanger, or some combination thereof) to lower the gel temperature to an optimum foaming temperature while still maintaining the temperature at or above the T_{g} of the styrenic polymer and at or above the T_{c} of the olefinic polymer. Typical foaming temperatures will range from about 110°C to about 150°C. The preferred foaming temperature for the present invention is selected to take into account the T_{g} of the styrenic polymer and the T_{c} of the olefinic polymer. The cooled foamable gel then arrives at the die. The pressure at the die entrance is of about 30 to about 150 bar, and more preferably about 50 to 120 bar. The gel is then extruded through a die into atmospheric pressure to form a foam structure of the present invention. A preferable foaming temperature is within a range from about 110°C to about 150°C, and more preferably from about 120°C to about 145°C based upon the particular styrenic polymer blend and olefinic polymer contemplated for use therein.

The foams of the present invention may be used in any application where hard, ridged foams are used. Such applications include, without limit, packaging (*e.g.*, corner blocks, braces, saddles, pouches, bags, envelopes, overwraps, interleafing, and encapsulation); material handling (*e.g.*, trays, tote boxes, box liners, tote box inserts and dividers, shunts, stuffing, boards, parts spacers and parts separators); automotive (*e.g.*, headliners, impact absorption in bumpers or doors, carpet underlayment, sound insulation, and helmet liners); roadway barriers (exit ramp barriers); flotation (*e.g.*, life jackets, vests, and belts); sports and leisure (*e.g.*, gym mats and bodyboards); thermal insulation such as that used in building and construction. The foregoing list merely illustrates a number of suitable applications. Skilled artisans can readily envision additional applications without departing from the scope or spirit of the present invention.

The following examples are provided to illustrate the invention but are not intended to limit the scope thereof. All parts and percentages (except percent open cell) are by weight unless otherwise indicated. The dimension of the foams produced in table 2 were not large enough for measuring representative compressive strengths.

### Example 1

A blend of 95% SAN copolymer (Mw = 131,000 with Mw/Mn = 2.3, T_{g} = 105°C) and 5% of LLDPE (Dowlex™ 2247, T_{c} = 105°C) is fed into an extruder where the temperature of the melting zone is set at 200°C. The melt is extruded into a mixer, where a mixture of blowing agents consisting of CO₂, H₂O and isobutane (iC4) (measured as part per hundred parts of total polymer weight ("pph")) is injected into and mixed with the polymer melt. The total blowing agent concentration is 0.183 mol per hundred grams (mph) of total polymer. The mixture is then cooled down to about 130°C (*e.g.*, the foaming temperature) and extruded through a slit die into atmospheric pressure. Foaming occurs as the mixture exits the die. The expected foam properties are presented in Table 1. Foam density is determined per ASTM D1622-03, the cell size per ASTM D3576, open cell content per ASTM D6226, and compressive strength per ASTM D1621-04.

A density of 25.3 kg/m³ is achieved with a vertical compressive strength of 230 kPa and a compressive strength ratio (Rc) of about 0.55. The open cell content is less than about 0.8% and the foam is achieved with an essentially crack free surface finish (e.g., visual inspection of surface).

### Example 2

The Example 1 is repeated except the LLDPE loading is increased to 10%. A density of 25.5 kg/m³ is produced, with a vertical compressive strength of 187 kPa and a compressive strength ratio of 0.55. An open cell content of about less than 1.4% is achieved with an essentially crack free surface finish.

### Example 3

The Example 2 is repeated except that the foaming temperature is increased to 133°C. A density of 23.7 kg/m³ is achieved, with a vertical compressive strength of 204 kPa and a compressive strength ratio of 0.58. The open cell content is less than about 15.0% and the foam has an essentially crack free surface finish.

### Example 4

The Example 3 is repeated except that the blowing agent mixture consists of CO₂ and H₂O only. A density of 24.9 kg/m³ is produced, with a vertical compressive strength of 216 kPa and a compressive strength ratio of 0.57. An open cell content of about 31.4% is produced (classifying this as an open cell foam) with an essentially crack free surface finish.

### Comparative Example 1

The comparative 1 foam is produced with SAN copolymer (Mw = 131,000 with Mw/Mn = 2.3) and with only 0.4% of LLDPE Dowlex-2247. The blowing agent mixture is like the one in Example 1 (CO₂, H₂O, and iC4). The foaming temperature is at 130°C. Foam density is higher than the previous examples and measured to be about 28.8 kg/m³. The foam has a vertical compressive strength of about 307 kPa and is not suitable for use in energy absorption applications, such as Thorax and Safety barriers.

### Example 5

A blend of SAN copolymer (Mw = 131,000 with Mw/Mn = 2.3) with a T_{g} of 105°C and 10% of LDPE (Dow LDPE 6201) with a T_{c} around 100°C is fed into an extruder at a temperature around 210°C. The melt is extruded into a mixer, where a blowing agent mixture consisting of 4 pph of CO₂ and 1.2 pph of H₂O is injected into and mixed with the polymer melt. The mixture is then cooled down to about 145°C and extruded through a slit die into atmospheric pressure. Foaming occurs as the polymer-blowing agent mixture exits the die. The foam has a density of 35.8 kg/m³ with zero open cell and is achieved with an essentially crack free surface finish.

### Example 6

Example 5 is repeated except that the polyolefin is a HDPE (HDPE DMDA-6230) with a T_{c} of about 117°C. The foam has a density of 33.3 kg/m³ with only 5% open cell and is achieved with an essentially crack free surface.

### Example 7

Example 5 is repeated except that the polyolefin is a HPDE (HDPE DGDH-1059) with a T_{c} of about 120°C. The foam has a density of 32.4 kg/m³ with zero open cell and is achieved with an essentially crack free surface.

### Example 8

Example 7 is repeated except that concentration of HOPE DGDH-1059 is increased to 20%. The foam has a density of 32.5 kg/m³ with only 5% open cell and is achieved with an essentially crack free surface finish.

### Comparative Example 2

The comparative foam for examples 5 through 8 is produced with SAN copolymer (Mw = 131,000 with Mw/Mn = 2.3) and without any polyolefin resin. The blowing agent mixture and the foaming conditions are like the ones in Examples 5 through 8. Foam density is for the comparative example is again higher, about 40.4 kg/m³.

### Comparative Example 3

Comparative Example 3 is produced with SAN copolymer (Mw = 131,000 with Mw/Mn = 2.3) and with 20% of an elastomeric resin (ENR-6386) with a T_{c} of about 47°C. The blowing agent mixture and the foaming conditions are like the ones in Examples 5 through 8. Foam density for Comparative Example 3 is 39.4 kg/m³ indicating that this formulation containing a resin with a low T_{c} does not produce the low densities embodied in our invention. The open cell content is 50%

**Table 1: Results for illustrative foams in examples 1 - 4 according to the invention**

| | | Ex.1 | Ex. 2 | Ex. 3 | Ex. 4 | Comparat ive Ex. 1 |
|---|---|---|---|---|---|---|
| FORMULATIONS | unit | Very low density | Very low density | Very low density | Very low density | Low density |
| CO₂ | pph (part per hundred) | 3.00 | 3.00 | 3.00 | 4.00 | 3.00 |
| iC4 | pph | 1.50 | 1.50 | 1.50 | 0.00 | 1.50 |
| H₂O | pph | 1.60 | 1.60 | 1.60 | 1.60 | 1.60 |
| BA moles | mph | 0.183 | 0.183 | 0.183 | 0.180 | 0.183 |
| LLDPE | pph | 5.00 | 10.00 | 10.00 | 10.00 | 0.40 |
| Talc | pph | 0.00 | 0.00 | 0.00 | 0.00 | 0.40 |
| Foaming Temperature | °C | 133 | 130 | 133 | 133 | 130 |
| Blowing Agent Pressure | bar | 134 | 138 | 132 | 134 | 139 |
| Die Pressure | bar | 82 | 79 | 80 | 76 | 87 |
| Foam Thickness | mm | 22 | 28 | 28 | 27 | 23 |
| Foam Density | kg/m³ | 25.3 | 25.5 | 23.7 | 24.9 | 28.8 |
| Cell Size | mm | 0.22 | 0.46 | 0.41 | 0.35 | 0.31 |
| Open Cell | % | 0.8 | 1.4 | 15.0 | 31.4 | 1.1 |
| Compressive Strength Vertical | kPa | 230 | 187 | 204 | 216 | 307 |
| Compressive Strength Extrusion | kPa | 100 | 69 | 56 | 74 | 180 |
| Compressive Strength Horizontal | kPa | 102 | 87 | 92 | 86 | 125 |
| Compressive strength ratio | Rc | 0.53 | 0.55 | 0.58 | 0.57 | 0.50 |

**Table 2: Results for illustrative foams in examples 5 - 10 according to the invention**

| | | Ex. 5 | Ex. 6 | Ex. 7 | Ex. 8 | Comparative Ex. 2 | Comparative Ex. 3 |
|---|---|---|---|---|---|---|---|
| | | Low Density | Low Density | Low Density | Low Density | Medium Density | Medium Density |
| Polyolefin (PO) Type | | LDPE 6201 | HDPE 6230 | HDPE 1059 | HDPE 1059 | No Polyolefin | Elastomer ENR-6386 |
| MI of PO (2.16 kg,190°C) | g/10 min | 1.8 | 0.3 | 0.9 | 0.9 | - | <0.1 |
| PO Density | g/cm³ | 0.92 | 0.95 | 0.96 | 0.96 | - | 0.88 |
| T_{c} of PO | °C | 100 | 117 | 120 | 120 | - | 47 |
| PO Loadinq | % | 10 | 10 | 10 | 20 | 0 | 20 |
| BaSt Loading | pph | 0 | 0 | 0 | 0 | 0.15 | 0 |
| Talc Loading | pph | 0.3 | 0.3 | 0.3 | 0.3 | 0 | 0.3 |
| Blowing Agent Pressure | bar | 183 | 228 | 207 | 190 | 169 | 207 |
| Die Pressure | bar | 83 | 95 | 90 | 83 | 41 | 86 |
| Foam Density | kg/m³ | 35.8 | 33.3 | 32.4 | 32.5 | 40.4 | 39.4 |
| Open cell | % | 0 | 5 | 0 | 5 | 0 | 50 |
| Average 3D Cell Size | mm | 0.38 | 0.34 | 0.47 | 0.26 | 0.34 | 0.27 |
| Vertical Cell Size | mm | 0.45 | 0.37 | 0.48 | 0.26 | 0.38 | 0.25 |
| Horizontal Cell Size | mm | 0.36 | 0.35 | 0.48 | 0.28 | 0.34 | 0.26 |
| Extruded Cell Size | mm | 0.34 | 0.31 | 0.46 | 0.24 | 0.32 | 0.30 |

## Claims

1. An extruded polymeric foam comprising:
(i) a styrenic polymer having a glass transition temperature (T_{g});
wherein T_{g} is obtained using the half-height method from the second DSC melting curve according to ASTM E1356-03;
wherein the styrenic polymer consists essentially of a styrene-acrylonitrile copolymer;
and wherein the styrene-acrylonitrile copolymer has an acrylonitrile component of 5% to 25% based on total weight of styrene-acrylonitrile copolymer; and
(ii) an olefinic polymer having a crystallization temperature (T_{C});
wherein T_{C} is the peak melting temperature obtained from the cooling curve using a differential scanning calorimeter (DSC) according to ASTM D3418-03; and
wherein the olefinic polymer consists essentially of polyethylene, polypropylene, ethylenic copolymer, or any combination thereof;
wherein the T_{g} of the styrenic polymer and the T_{C} of the polyolefin, are within 30°C of each other;
wherein the amount of polyolefinic material to styrenic material is from 2:98 to 20:80;
wherein the styrenic polymer and the olefinic polymer are present as a blend including less than 5% interpolymer or less than 2% of any other compatibilizers by total polymer weight; and
wherein the foam has a density below 36 kg/m³ (as measured by ASTM D1622-03), a vertical compressive strength greater than 100 kPa and less than 300kPa as measured by ASTM D1621-04, and a compressive strength ratio (Rc) greater than 0.35.

2. The extruded polymeric foam according to claim 1 wherein the foam has a density of less than 28 kg/m³ as measured by ASTM D1622-03 and wherein the olefinic polymer has a crystallization temperature greater than 25°C.

3. The extruded polymeric foam according to any of claims 1 through 2, wherein the T_{g} is in the range of 90 to 120°C, the T_{C} is in the range of 70 to 130°C.

4. The extruded polymeric foam according to any of claims 1 through 3, wherein the olefinic polymer includes a linear low density polyethylene.

5. The extruded polymeric foam according to any of claims 1 through 4, wherein the foam has a compressive strength ratio of greater than 0.40 (as measured per ASTM D1621-04).

6. The extruded polymeric foam according to any of claims 1 through 5, wherein the foam is a closed cell foam having an open cell content of less than 5% as determined by ASTM D6226-05.

7. The extruded polymeric foam according to any of claims 1 through 6, wherein the foam is entirely free of any compatibilizer.

8. The extruded polymeric foam according to any of claims 1 through 7, wherein the styrene-acrylonitrile copolymer has an acrylonitrile concentration of 10 wt.% to 20 wt.% based on the total weight of the styrene-acrylonitrile copolymer.

9. A process of forming an extruded polymeric foam of any of claims 1 through 8, comprising the steps of:
(a) blending the styrenic material with the olefinic polymer wherein the olefinic polymer has a T_{c} greater than 70°C to form a polymeric blend;
(b) introducing a blowing agent including water (H₂O), carbon dioxide (CO₂), or both to the polymeric blend; and
(c) foaming the polymeric blend at a temperature above the T_{c} of the olefinic polymer to directly form a foam.

## Patentansprüche

1. Ein extrudierter polymerer Schaumstoff, der Folgendes beinhaltet:
(i) ein styrenisches Polymer mit einer Glasübergangstemperatur (Tg);
wobei T_{g} unter Verwendung des Halbhöhenverfahrens aus der zweiten DSK-Schmelzkurve gemäß ASTM E1356-03 erhalten wird;
wobei das styrenische Polymer im Wesentlichen aus einem Styren-Acrylnitril-Copolymer besteht;
und wobei das Styren-Acrylnitril-Copolymer eine Acrylnitril-Komponente von 5 % bis 25 %, bezogen auf das Gesamtgewicht des Styren-Acrylnitril-Copolymers, aufweist; und
(ii) ein olefinisches Polymer mit einer Kristallisationstemperatur (T_{C});
wobei T_{C} die Spitzenschmelztemperatur ist, die aus der Abkühlungskurve unter Verwendung eines Differential-Scanning-Kalorimeters (DSK) gemäß ASTM D3418-03 erhalten wird; und
wobei das olefinische Polymer im Wesentlichen aus Polyethylen, Polypropylen, ethylenischem Copolymer oder einer beliebigen Kombination davon besteht;
wobei die T_{g} des styrenischen Polymers und die T_{C} des Polyolefins innerhalb von 30 °C voneinander liegen;
wobei die Menge von polyolefinischem Material zu styrenischem Material von 2:98 bis 20:80 beträgt;
wobei das styrenische Polymer und das olefinische Polymer als eine Mischung vorliegen, die weniger als 5 % Mischpolymerisat oder weniger als 2 % von beliebigen anderen Phasenvermittlern nach dem Polymergesamtgewicht umfasst; und
wobei der Schaumstoff eine Dichte von unter 36 kg/m³ (wie nach ASTM D1622-03 gemessen), eine vertikale Druckfestigkeit von mehr als 100 kPa und weniger als 300 kPa, wie nach ASTM D1621-04 gemessen, und ein Druckfestigkeitsverhältnis (R_{C}) von größer als 0,35 aufweist.

2. Extrudierter polymerer Schaumstoff gemäß Anspruch 1, wobei der Schaumstoff eine Dichte von weniger als 28 kg/m³, wie nach ASTM D1622-03 gemessen, aufweist und wobei das olefinische Polymer eine Kristallisationstemperatur von höher als 25 °C aufweist.

3. Extrudierter polymerer Schaumstoff gemäß einem der Ansprüche 1 bis 2,
wobei die T_{g} in dem Bereich von 90 bis 120 °C liegt, die T_{C} in dem Bereich von 70 bis 130 °C liegt.

4. Extrudierter polymerer Schaumstoff gemäß einem der Ansprüche 1 bis 3,
wobei das olefinische Polymer ein lineares Polyethylen mit niedriger Dichte umfasst.

5. Extrudierter polymerer Schaumstoff gemäß einem der Ansprüche 1 bis 4,
wobei der Schaumstoffartikel ein Druckfestigkeitsverhältnis von größer als 0,40 (wie nach ASTM D1621-04 gemessen) aufweist.

6. Extrudierter polymerer Schaumstoff gemäß einem der Ansprüche 1 bis 5, wobei der Schaumstoff ein geschlossenzelliger Schaumstoff mit einem Anteil an offenen Zellen von weniger als 5 % ist, wie nach ASTM D6226-05 bestimmt.

7. Extrudierter polymerer Schaumstoff gemäß einem der Ansprüche 1 bis 6, wobei der Schaumstoffartikel gänzlich frei von jeglichem Phasenvermittler ist.

8. Extrudierter polymerer Schaumstoff gemäß einem der Ansprüche 1 bis 7, wobei das Styren-Acrylnitril-Copolymer eine Acrylnitril-Konzentration von 10 Gew.-% bis 20 Gew.-%, bezogen auf das Gesamtgewicht des Styren-Acrylnitril-Copolymers, aufweist.

9. Ein Prozess zum Bilden eines extrudierten polymeren Schaumstoff gemäß einem der Ansprüche 1 bis 8, der die folgenden Schritte beinhaltet:
(a) Mischen des styrenischen Materials mit dem olefinischen Polymer, wobei das olefinische Polymer eine T_{c} von höher als 70 °C aufweist, um eine polymere Mischung zu bilden;
(b) Einführen eines Treibmittels, das Wasser (H₂O), Kohlendioxid (CO₂) oder beides umfasst, in die polymere Mischung; und
(c) Aufschäumen der polymeren Mischung bei einer Temperatur über der T_{c} des olefinischen Polymers, um direkt einen Schaumstoff zu bilden.

## Revendications

1. Une mousse polymère extrudée comprenant :
(i) un polymère styrène ayant une température de transition vitreuse (T_{g}) ;
dans lequel T_{g} est obtenu en utilisant la méthode de mi-hauteur de la deuxième courbe de fusion DSC selon ASTM E1356-03 ;
dans lequel le polymère styrène est constitué essentiellement d'un copolymère styrène-acrylonitrile ;
et dans lequel le copolymère styrène-acrylonitrile a un composant acrylonitrile de 5 % à 25 % sur la base du poids total du copolymère styrène-acrylonitrile ; et
(ii) un polymère oléfine ayant une température de cristallisation (T_{C}) ;
dans lequel la T_{C} est la température de fusion de crête obtenue à partir de la courbe de refroidissement en utilisant un calorimètre différentiel à balayage (DSC) selon ASTM D3418-03 ; et
dans lequel le polymère oléfine est constitué essentiellement de polyéthylène, polypropylène, copolymère éthylène, ou n'importe quelle combinaison de ceux-ci ;
dans laquelle la T_{g} du polymère styrène et la T_{C} de la polyoléfine ne diffèrent pas de plus de 30 °C l'une de l'autre ;
dans laquelle la quantité de matériau polyoléfine par rapport au matériau styrène va de 2/98 à 20/80 ;
dans laquelle le polymère styrène et le polymère oléfine sont présents en tant que mélange homogène incluant moins de 5 % d'interpolymère ou moins de 2 % de n'importe quels autres agents de compatibilité par rapport au poids de polymère total ; et
dans laquelle la mousse a une masse volumique inférieure à 36 kg/m³ (telle que mesurée d'après ASTM D1622-03), une résistance à la compression verticale supérieure à 100 kPa et de moins de 300 kPa telle que mesurée d'après ASTM D1621-04, et un rapport de résistance à la compression (Rc) supérieur à 0,35.

2. Une mousse polymère extrudée selon la revendication 1 dans lequel la mousse a une densité de moins de 28 kg/m³ tel que mesuré d'après ASTM D1622-03 et dans lequel le polymère oléfine a une température de cristallisation supérieure à 25 °C.

3. Une mousse polymère extrudée selon n'importe lesquelles des revendications 1 à 2, dans lequel la T_{g} est de l'ordre de 90 à 120 °C, la T_{c} est de l'ordre de 70 à 130 °C.

4. Une mousse polymère extrudée selon n'importe lesquelles des revendications 1 à 3, dans lequel le polymère oléfine inclut un polyéthylène à basse densité linéaire.

5. Une mousse polymère extrudée selon n'importe lesquelles des revendications 1 à 4, dans lequel l'article en mousse a un rapport de résistance à la compression supérieur à 0,40 (tel que mesuré d'après ASTM D1621-04).

6. Une mousse polymère extrudée selon n'importe lesquelles des revendications 1 à 5, dans lequel la mousse est une mousse à alvéoles fermées ayant une teneur en alvéoles ouvertes de moins de 5 % tel que déterminé d'après ASTM D6226-05.

7. Une mousse polymère extrudée selon n'importe lesquelles des revendications 1 à 6, dans lequel l'article en mousse est dépourvu de tout agent de compatibilité.

8. Une mousse polymère extrudée selon n'importe lesquelles des revendications 1 à 7, dans lequel le copolymère styrène-acrylonitrile a une concentration en acrylonitrile de 10 % poids à 20 % poids rapporté au poids total du copolymère styrène-acrylonitrile.

9. Un procédé de formation d'un mousse polymère extrudée de n'importe lesquelles des revendications 1 à 8, comprenant les étapes de :
(a) mélanger de façon homogène le matériau styrène avec le polymère oléfine dans lequel le polymère oléfine a une T_{c} supérieure à 70 °C pour former un mélange polymère homogène ;
(b) introduire un agent gonflant incluant de l'eau (H₂O), du dioxyde de carbone (CO₂), ou les deux dans le mélange polymère homogène ; et
(c) faire mousser le mélange polymère homogène à une température au-dessus de la T_{c} du polymère oléfine pour former directement une mousse.
